# EUROPEAN PATENT APPLICATION

(11) **EP 3 843 330 A1**
(43) Date of publication of application: **30.06.2021**
(21) Application number: 18930554.3
(22) Date of filing: 21.08.2018
(51) Int. Cl.: H04L 12/18

(54) **METHOD FOR SETTING CONTROL FUNCTION, CONTROL DEVICE AND CONTROL SYSTEM**

(71) Applicant: SZ DJI Technology Co., Ltd., Shenzhen, Guangdong 518057 (CN)
(72) Inventor: YANG, Xiaoyuan, Shenzhen, Guangdong 518057 (CN); XIE, Peng, Shenzhen, Guangdong 518057 (CN); LI, Shangxiong, Shenzhen, Guangdong 518057 (CN)
(74) Representative: Appelt, Christian W.
(86) International application number: PCT/CN2018/101447
(87) International publication number: WO 2020/037483

(57) **Abstract**

A control function configuration method, a control device, and a control system are provided. The control function configuration method includes: broadcasting a control function message to secondary control devices in a control system through a narrow-band communication network, where the control function message is used for a first secondary control device to configure its control function (S201); receiving a first notification message sent by the first secondary control device through the narrow-band communication network, where the first notification message is used to indicate that the control function of the first secondary control device has been configured to be a target control function (S203); broadcasting a first status message to the secondary control devices in the control system through the narrow-band communication network, where the first status message is used to indicate that the control function of the first secondary control device has been configured to be the target control function (S204). The control function configuration method provided by the present disclosure improves the flexibility of configuring the control function of a secondary control device.

## Description

### TECHNICAL FIELD

The present disclosure relates to the technical field of movable platform and control and, more particularly, to a control function configuration method, a control device, and a control system.

### BACKGROUND

With the development of unmanned aerial vehicle (UAV) technology and UAV control technology, the use of multiple connected remote controllers for aerial photography is a control mechanism becoming more and more popular. In the control mechanism, the multiple connected remote controllers are assigned to control photographing devices with different roles (e.g., a UAV operator, a director, a gimbal operator, a focus puller, etc.). Each remote controller performs different control functions respectively. For example, the remote controller assigned to the UAV operator controls the flight of the UAV, and the remote controller assigned to the focus puller controls parameters of a camera mounted at the UAV. The camera crew responsibilities are clearly defined, and hence the quality and flexibility of aerial photography are improved.

Currently, the control mechanism based on multiple connected remote controllers uses Wireless Fidelity (Wi-Fi) technology. Each node in a Wi-Fi network functions identically. Configuring and modifying control functions of different remote controllers involves complicated software algorithm. Moreover, the Wi-Fi network only covers a limited communication distance, resulting in poor flexibility in configuring and modifying the control functions of the remote controllers.

### SUMMARY

The present disclosure provides a control function configuration method, a control device, and a control system, thereby improving the flexibility of configuring a control function of a secondary control device.

In accordance with the disclosure, there is provided a control function configuration method. The method includes:
broadcasting a control function message to secondary control devices in a control system through a narrow-band communication network, wherein the control function message is used for a first secondary control device to configure its control function;
receiving a first notification message sent by the first secondary control device through the narrow-band communication network, wherein the first notification message is used to indicate that the control function of the first secondary control device has been configured to be a target control function;
broadcasting a first status message to the secondary control devices in the control system through the narrow-band communication network, wherein the first status message is used to indicate that the control function of the first secondary control device has been configured to be the target control function.

Also in accordance with the disclosure, there is provided another control function configuration method. The method includes:
receiving a control function message broadcasted by a primary control device through a narrow-band communication network, wherein the control function message is used for a first secondary control device to configure its control function;
configuring the control function of the first secondary control device to be a target control function according to the control function message;
sending a first notification message to the primary control device through the narrow-band communication network, wherein the first notification message is used to indicate that the control function of the first secondary control device has been configured to be the target control function.

Also in accordance with the disclosure, there is provided another control function configuration method. The method includes:
receiving a function configuration request broadcasted by a primary control device through a narrow-band communication network, wherein the function configuration request is used to request to configure a control function of a first secondary control device to be a target control function;
if a current control function of a second secondary control device is the target control device, cancelling the target control function of the second secondary control device according to the function configuration request;
sending a first notification message to the primary control device through the narrow-band communication network, wherein the first notification message is used to indicate that the control function of the second secondary control device has been cancelled.

Also in accordance with the disclosure, there is provided another control function configuration method applied to a control system including a primary control device and at least one secondary control device. The method includes:
receiving a function configuration request for a first secondary control device, wherein the function configuration request includes a target control function;
determining whether a second secondary control device with the target control function currently exists in the control system;
if the second secondary control device with the target control function does not currently exist in the control system, configuring a control function of the first secondary control device to be the target control function;
if the second secondary control device with the target control function currently exists in the control system, broadcasting, by the primary control device, the function configuration request for the first secondary control device to secondary control devices in the control system through a narrow-band communication network to achieve function switching between the first secondary control device and the second secondary control device.

Also in accordance with the disclosure, there is provided a control device. The control device includes a memory, a processor, and a transceiver.

The memory is configured to store program code.

The processor is configured to call the program code, when the program code is executed, control the transceiver to:
broadcast a control function message to secondary control devices in a control system through a narrow-band communication network, wherein the control function message is used for a first secondary control device to configure its control function;
receive a first notification message sent by the first secondary control device through the narrow-band communication network, wherein the first notification message is used to indicate that the control function of the first secondary control device has been configured to be a target control function;
broadcast a first status message to the secondary control devices in the control system through the narrow-band communication network, wherein the first status message is used to indicate that the control function of the first secondary control device has been configured to be the target control function.

Also in accordance with the disclosure, there is provided another control device. The control device includes a memory, a processor, and a transceiver.

The memory is configured to store program code.

The processor is configured to call the program code, when the program code is executed:
control the transceiver to receive a control function message broadcasted by a primary control device through a narrow-band communication network, wherein the control function message is used for a first secondary control device to configure its control function;
configure the control function of the first secondary control device to be a target control function according to the control function message;
control the transceiver to send a first notification message to the primary control device through the narrow-band communication network, wherein the first notification message is used to indicate that the control function of the first secondary control device has been configured to be the target control function.

Also in accordance with the disclosure, there is provided another control device. The control device includes a memory, a processor, and a transceiver.

The memory is configured to store program code.

The processor is configured to call the program code, when the program code is executed:
receive a function configuration request broadcasted by a primary control device through a narrow-band communication network, wherein the function configuration request is used to request to configure a control function of a first secondary control device to be a target control function;
if a current control function of a second secondary control device is the target control device, cancel the target control function of the second secondary control device according to the function configuration request;
send a first notification message to the primary control device through the narrow-band communication network, wherein the first notification message is used to indicate that the control function of the second secondary control device has been cancelled.

Also in accordance with the disclosure, there is provided a control system. The control system includes a primary control device and at least one secondary control device. The primary control device or the at least one secondary control device is configured to:
receive a function configuration request for a first secondary control device, wherein the function configuration request includes a target control function;
determine whether a second secondary control device with the target control function currently exists in the control system;
if the second secondary control device with the target control function does not currently exist in the control system, configure a control function of the first secondary control device to be the target control function;
if the second secondary control device with the target control function currently exists in the control system, broadcast, by the primary control device, the function configuration request for the first secondary control device to secondary control devices in the control system through a narrow-band communication network to achieve function switching between the first secondary control device and the second secondary control device.

Also in accordance with the disclosure, there is provided a storage medium. The storage medium includes a computer-readable storage medium and a computer program. The computer program is used to implement the disclosed control function configuration method.

Also in accordance with the disclosure, there is provided a program product. The program product includes a computer program (i.e., executive instructions). The computer program is stored in a computer-readable storage medium. A processor may retrieve the computer program from the computer-readable storage medium. The processor executes the computer program to implement the disclosed control function configuration method.

The present disclosure provides a control function configuration method, a control device, and a control system. In the control system, the primary control device and the secondary control device communicate with each other through the narrow-band communication network, which extends the communication distance, and shortens the communication delay. Moreover, the first secondary control device configures its control function to be the target control function according to the control function message broadcasted by the primary control device, thereby simplifying the complexity of configuring the control function and improving the flexibility of configuring the control function of the secondary control device.

### BRIEF DESCRIPTION OF THE DRAWINGS

To more clearly illustrate the technical solution of the present disclosure or the existing technology, the accompanying drawings used in the description of the disclosed embodiments or the existing technology are briefly described hereinafter. The drawings described below are merely some embodiments of the present disclosure. Other drawings may be derived from such drawings by a person with ordinary skill in the art without creative efforts and may be encompassed in the present disclosure.
FIG. 1 is a schematic structural diagram of a movable platform system according to an example embodiment of the present disclosure.
FIG. 2 is a schematic diagram showing message exchanges of a control function configuration method according to a first example embodiment of the present disclosure.
FIG. 3 is a schematic diagram showing message exchanges of a control function configuration method according to a second example embodiment of the present disclosure.
FIG. 4 is a schematic diagram showing message exchanges of a control function configuration method according to a third example embodiment of the present disclosure.
FIG. 5 is a schematic diagram showing message exchanges of a control function configuration method according to a fourth example embodiment of the present disclosure.
FIG. 6 is a schematic diagram showing message exchanges of a control function configuration method according to a fifth example embodiment of the present disclosure.
FIG. 7 is a schematic diagram showing message exchanges of a control function configuration method according to a sixth example embodiment of the present disclosure.
FIG. 8 is a schematic diagram showing message exchanges of a control function configuration method according to a seventh example embodiment of the present disclosure.
FIG. 9 is a schematic diagram showing message exchanges of a control function configuration method according to an eighth example embodiment of the present disclosure.
FIG. 10 is a schematic structural diagram of a control device according to an example embodiment of the present disclosure.
FIG. 11 is a schematic structural diagram of a control system according to an example embodiment of the present disclosure.

### DETAILED DESCRIPTION OF THE EMBODIMENTS

To make objectives, technical solutions, and advantages of the embodiments of the present disclosure clearer, the technical solutions of the embodiments of the present disclosure will be described clearly and completely with reference to the accompanying drawings. It will be appreciated that the described embodiments are some rather than all of the embodiments of the present disclosure. Other embodiments obtained by those having ordinary skills in the art on the basis of the described embodiments without inventive efforts should fall within the scope of the present disclosure.

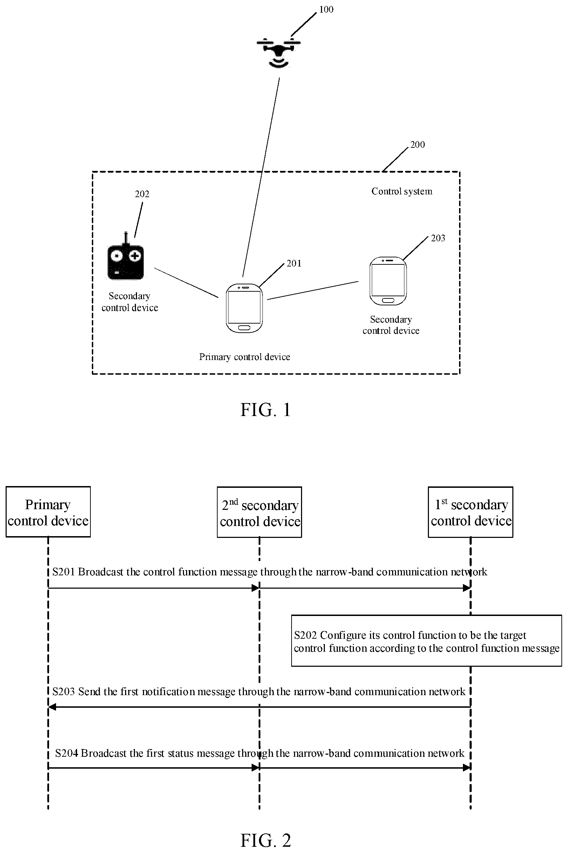

FIG. 1 is a schematic structural diagram of a movable platform system according to an example embodiment of the present disclosure. As shown in FIG. 1, the movable platform system may include a movable platform 100 and a control system 200. Types of the movable platform 100 are not limited by the present disclosure. For example, the movable platform 100 may be an unmanned aerial vehicle (UAV), an unmanned automobile, etc. For illustration purpose, as shown in FIG. 1, the movable platform 100 is a UAV. The control system 200 communicates with the movable platform 100. The control system 200 controls the movable platform 100. Taking the UAV as an example, the control system 200 may control the flight of the UAV, facilitate data transmission, configure photographing parameters of a photographing device mounted at the UAV, and control rotation of a gimbal mounted at the UAV.

The control system 200 may include a plurality of control devices. One of the plurality of control devices is a primary control device. The primary control device communicates with the movable platform 100. Excluding the primary control device, the remaining control devices in the control system 200 are secondary control devices. The secondary control devices communicate with the primary control device through a narrow-band communication network. Each secondary control device may be configured with a control function to control the movable platform 100. At the same time, different secondary control devices may be configured with different control functions. The primary control device may obtain status information of at least one salve control device by means of periodic polling or event triggering, and may broadcast the status information to the secondary control devices in the control system 200 through the narrow-band communication network. The status information includes at least a connection status of the secondary control device and a currently configured control function.

For illustration purpose, as shown in FIG. 1, the control system 200 includes a primary control device 201, a secondary control device 202, and a secondary control device 203. The secondary control device 202 and the secondary control device 203 may communicate with the primary control device 201 through the narrow-band communication network. The secondary control device 202 may be configured to control the flight of the UAV. The secondary control device 203 may be configured to configure the related parameters of the photographing device mounted at the UAV. Assuming that the control function of the secondary control device 201 is modified to control the rotation of the gimbal mounted at the UAV, the primary control device 201 may broadcast the modification of the control function of the secondary control device 202 through the narrow-band communication network.

It should be noted that the number of the secondary control devices included in the control system 200 is not limited by the present disclosure. The types of the control devices are not limited present disclosure either. For example, the control device may be a remote controller, a computer, a smart phone, a tablet computer, etc. Optionally, the control device itself may include an input apparatus. Optionally, the control device may be connected to an external input apparatus. Optionally, the input apparatus may be a mouse, a keyboard, a touch display screen, an audio input device, etc. Optionally, the control device may be pre-installed with an application program (APP) for controlling the movable platform.

The control function configuration method, the control device, and the control system provided by the embodiments of the present disclosure achieve configuring and modifying the control function of the secondary control devices included in the control system, thereby improving the flexibility of the control function configuration. The detailed description will be given below with specific embodiments.

FIG. 2 is a schematic diagram of message exchanges of a control function configuration method according to a first example embodiment of the present disclosure. The control function configuration method provided by the embodiment of the present disclosure may be applied to a control system. The control system may include a primary control device and at least one secondary control device. As shown in FIG. 2, the control function configuration method provided by the embodiment of the present disclosure may include the following steps.

At S201, the primary control device broadcasts a control function message to the at least one control device included in the control system through a narrow-band communication network.

The control function message is used to configure the control function of a first secondary control device.

Correspondingly, the at least one control device included in the control system may receive the control function message broadcasted by the primary control device through the narrow-band communication network.

Specifically, the primary control device communicates with the at least one secondary control device through the narrow-band communication network. The narrow-band communication network supports long communication distances and short communication delays. Moreover, roles of different nodes in the narrow-band communication network may be different. For example, the control system consistent with the embodiments of the present disclosure may include the primary control device and the at least one secondary control device.

To differentiate the secondary control devices in the control system, the secondary control device of which the control function needs to be configured is called a first secondary control device, and the secondary control device of which the current control function is a target control function is called a second secondary control device. The first secondary control device may or may not have been configured with a control function. The primary control device broadcasts the control function message for configuring the control function of the first secondary control device through the narrow-band communication network.

At S202, according to the control function message, the first secondary control device configures the control function to be the target control function.

At S203, the first secondary control device sends a first notification message to the primary control device through the narrow-band communication network.

The first notification message is used to indicate that the control function of the first secondary control device has been configured to be the target control function.

Correspondingly, the primary control device receives the first notification message sent by the first secondary control device through the narrow-band communication network.

At S204, the primary control device broadcasts a first status message to the secondary control device in the control system through the narrow-band communication network.

The first status message is used to indicate that the control function of the first secondary control device has been configured to be the target control function.

Correspondingly, the secondary control devices in the control system receive the first status message broadcasted by the primary control device.

Specifically, after the first secondary control device configures its control function to be the target control function according to the control function message, the first secondary control device notifies the primary control device of the change of the control function. The primary control device broadcasts the change of the control function for the first secondary control device to each secondary control device in the control system. Thus, each secondary control device may learn that the current control function of the first secondary control device is the target control function.

It can be seen that, in the control function configuration method provided by the embodiment of the present disclosure, the primary control device in the control system communicates with the secondary control devices in the control system through the narrow-band communication network, which extends the communication distance and shortens the communication delay. Moreover, the first secondary control device configures its control function to be the target control function according to the control function message broadcasted by the primary control device, thereby simplifying the complexity of configuring the control function and improving the flexibility of configuring the control function by the secondary control device.

Optionally, the control function configuration method may further include: obtaining, by the primary control device, the status information of the secondary control devices in the control system. The status information includes at least the connection status of the secondary control device and the corresponding control function.

The primary control device broadcasts the status information to the secondary control devices through the narrow-band communication network.

Correspondingly, the secondary control devices in the control system may receive the status information broadcasted by the primary control device through the narrow-band communication network.

Through the status information broadcasted by the primary control device, each secondary control device may learn the current connection status and the current control function of other secondary control devices in the control system, thereby facilitating the secondary control device to configure its control function.

Optionally, broadcasting, by the primary control device, the status information to the secondary control devices through the narrow-band communication network may include: periodically broadcasting, by the primary control device, the status information to the secondary control devices through the narrow-band communication network, and/or broadcasting the status information to the secondary control devices through the narrow-band communication network after the primary control device is triggered by a status change of the secondary control device.

It should be noted that the specific value of the interval for periodically broadcasting the status information by the primary control device is not limited by the present disclosure.

The present disclosure provides a control function configuration method. The method includes the following steps. The primary control device broadcasts the control function message to the secondary control devices in the control system through the narrow-band communication network. The first secondary control device configures its control function to be the target control function according to the control function message. The first secondary control device sends the first notification message to the primary control device through the narrow-band communication network. The primary control device broadcasts the first status message to the secondary control devices in the control system through the narrow-band communication network. In the control function configuration method, the first secondary control device configures its control function to be the target control function according to the control function message broadcasted by the primary control device through the narrow-band communication network, thereby simplifying the complexity of configuring the control function and improving the flexibility of configuring the control function. Moreover, the communication distance is extended and the communication delay is shortened.

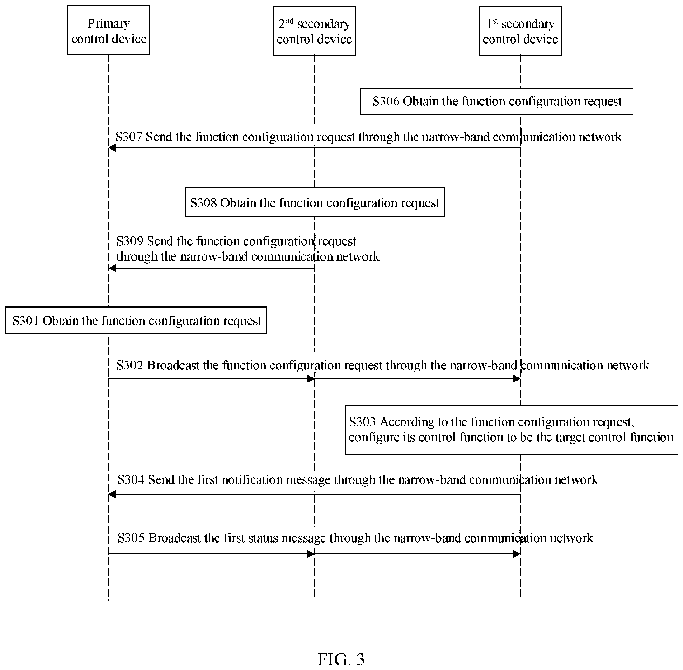

FIG. 3 is a schematic diagram of message exchanges of a control function configuration method according to a second example embodiment of the present disclosure. Based on the embodiment shown in FIG. 2, the present disclosure provides another embodiment of the control function configuration method. Specifically, the control function message is a function configuration request obtained by the primary control device. As shown in FIG. 3, the control function method provided by the embodiment of the present disclosure may include the following steps.

At S301, the primary control device obtains a function configuration request.

The function configuration request is used to request to configure the control function of the first secondary control device to be the target control function.

At S302, the primary control device broadcasts the function configuration request to the secondary control devices in the control system through the narrow-band communication network.

At S303, the first secondary control device configures its control function to be the target control function according to the function configuration request.

At S304, the first secondary control device sends the first notification message to the primary control device through the narrow-band communication network.

At S305, the primary control device broadcasts the first status message to the secondary control devices in the control system through the narrow-band communication network.

For S302 to S305, reference can be made to the description of S201 to S204 in the embodiment shown in FIG. 2. Specifically, the control function message is the function configuration request. The operation principle and technical effect are similar and the detailed description is omitted.

In the control function configuration method provided by the embodiment of the present disclosure, the primary control device obtains the function configuration request. The function configuration request clearly indicates that the control function of the first secondary control device is configured to be the target control function. The first secondary control device receives the function configuration request broadcasted by the primary control device through the narrow-band communication network, and configures its control function to be the target control function. The clear indication of the function configuration request simplifies the complexity of configuring the control function by the secondary control device, and improves the flexibility of configuring the control function. Moreover, the communication through the narrow-band communication network extends the communication distance and shortens the communication delay.

Optionally, in one embodiment, obtaining the function control request by the primary control device at S301 may include: obtaining, by the primary control device, the function configuration request inputted by a user.

Specifically, the primary control device may obtain the function configuration request inputted by the user through a built-in input apparatus or an externally connected input apparatus. For example, the input apparatus may be the touch display screen. The primary control device may obtain the function configuration request based on a touch operation input performed by the user on the touch display screen.

Optionally, in one embodiment, obtaining the function control request by the primary control device at S301 may also include: obtaining, by the secondary control device, the function configuration request inputted by the user

The secondary control device sends the function configuration request to the primary control device through the narrow-band communication network.

Correspondingly, obtaining, by the primary control device, the function configuration request may include: receiving, by the primary control device, the function configuration request sent by the secondary control device through the narrow-band communication network.

The secondary control device may be the first secondary control device or other secondary control devices in the control system other than the first secondary control device.

The embodiment is described below with reference to FIG. 3.

In one embodiment, before S301, the method may also include the following steps.

At S306, the first secondary control device obtains the function configuration request inputted by the user.

At S307, the first secondary control device sends the function configuration request to the primary control device through the narrow-band communication network.

In another embodiment, before S301, the method may also include the following steps.

At S308, the second secondary control device obtains the function configuration request inputted by the user.

At S307, the second secondary control device sends the function configuration request to the primary control device through the narrow-band communication network.

In the control function configuration method provided by the embodiment of the present disclosure, the primary control device obtains the function configuration request and broadcasts the function configuration request to the secondary control devices in the control system through the narrow-band communication network. Because the function configuration request clearly indicates that the control function of the first secondary control device is configured to be the target control function, the clear indication of the function configuration request simplifies the complexity of configuring the control function by the secondary control device, and improves the flexibility of configuring the control function. Moreover, the communication through the narrow-band communication network extends the communication distance and shortens the communication delay.

With reference to different application scenarios, the control function configuration method is further described based on the embodiment shown in FIG. 3.

Optionally, in one application scenario, the second secondary control device with the target control function does not currently exist in the control system. The first secondary control device may or may have been configured with a control function. At S303, configuring, by the first secondary control device, its control function to be the target control function according to the function configuration request may include: directly configuring, by the first secondary control device, its control function to be the target control function according to the function configuration request.

Specifically, if the first secondary control device has not been currently configured with any control function, the first secondary control device may achieve configuring, by the secondary control device, its control function. If the first secondary control device has been currently configured with the control function, the first secondary control device may achieve modifying or switching, by the secondary control device, its control function, that is, switching from the originally configured control function to the target control function.

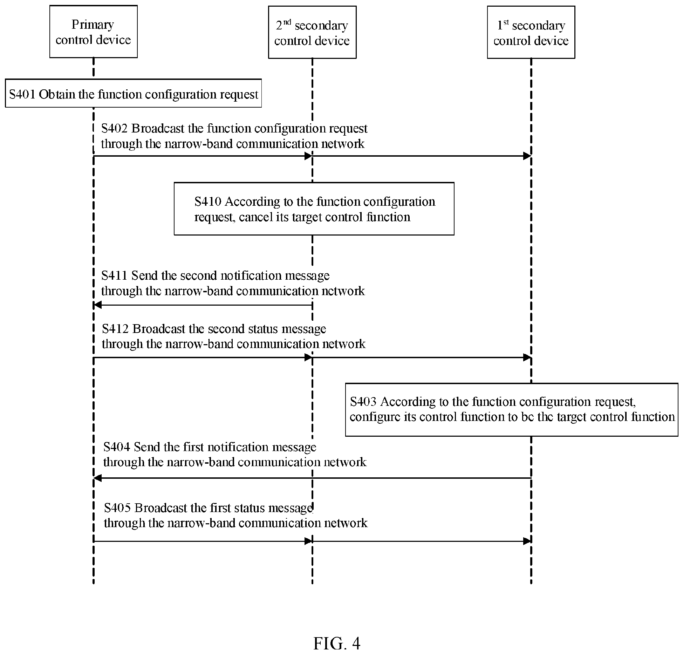

Optionally, in another application scenario, the second secondary control device with the target control function does currently exist in the control system, and the first secondary control device has not been currently configured with any control function. Referring to FIG. 4, FIG. 4 is a schematic diagram of message exchanges of a control function configuration method according to a third example embodiment of the present disclosure. As shown in FIG. 4, before S403, the control function configuration method provided by the embodiment of the present disclosure may also include the following steps.

At S410, the second secondary control device cancels its target control function.

At S411, the second secondary control device sends a second notification message to the primary control device through the narrow-band communication network.

The second notification message is used to indicate that the target control function of the second secondary control device has been cancelled.

Correspondingly, the primary control device receives the second notification message sent by the second secondary control device through the narrow-band communication network.

At S412, the primary control device broadcasts a second status message to the secondary control devices in the control system through the narrow-band communication network.

The second status message is used to indicate that the target control function of the second secondary control device has been cancelled.

Correspondingly, the secondary control devices in the control system receive the second status message broadcasted by the primary control device through the narrow-band communication network.

For S401 to S405, reference can be made to the description of S301 to S305 in the embodiment shown in FIG. 3. The operation principle and technical effect are similar and the detailed description is omitted.

Specifically, through the function configuration request broadcasted by the primary control device, each secondary control device in the control system learns that the control function of the first secondary control device needs to be configured to be the target control function. However, the control function of the second secondary control device is currently configured to be the target control function. Because different secondary control devices in the control system cannot be configured to have a same control function, the second secondary control device cancels its target control function and sends the second notification message to the primary control device. The primary control device broadcasts the second status message to the secondary control devices to notify each secondary control device of the change of the control function of the second secondary control device. The first secondary control device learns that no secondary control device currently configured with the target control function exists in the control system, and configures its control function to be the target control function, thereby completing the configuration of the control function.

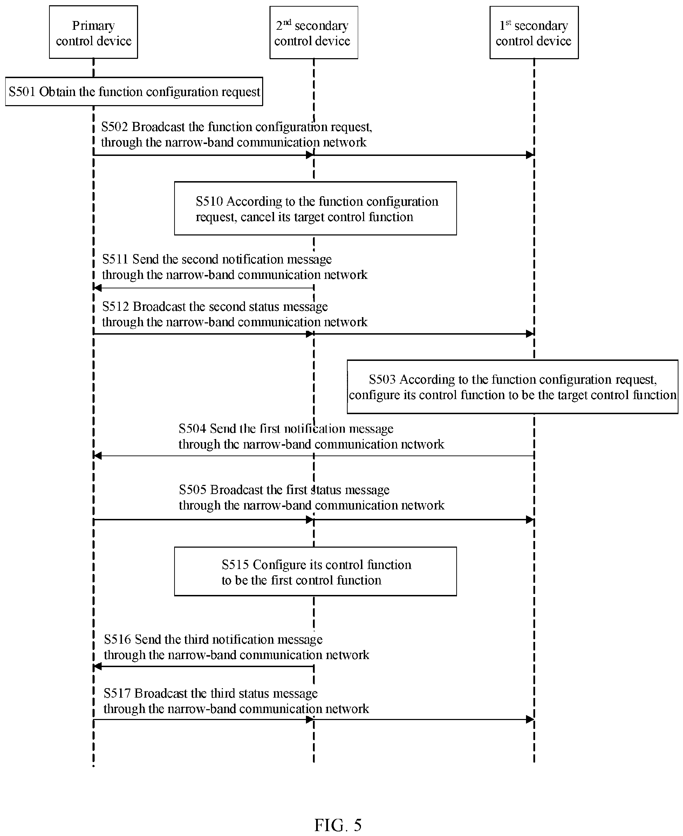

Optionally, in another application scenario, the second secondary control device with the target control function does currently exist in the control system, and the first secondary control device is currently configured with a first control function. Referring to FIG. 5, FIG. 5 is a schematic diagram of message exchanges of a control function configuration method according to a fourth example embodiment of the present disclosure. As shown in FIG. 5, after S505, the control function configuration method provided by the embodiment of the present disclosure may also include the following steps.

At S515, the second secondary control device configures its control function to be the first control function.

At S516, the second secondary control device sends a third notification message to the primary control device through the narrow-band communication network.

The third notification message is used to indicate that the control function of the second secondary control device has been configured to be the first control function.

Correspondingly, the primary control device receives the third notification message sent by the second secondary control device through the narrow-band communication network.

At S517, the primary control device broadcasts a third status message to the secondary control devices in the control system through the narrow-band communication network.

The third status message is used to indicate that the control function of the second secondary control device has been configured to be the first control function.

Correspondingly, the secondary control devices in the control system receive the third status message broadcasted by the primary control device through the narrow-band communication network.

For S501 to S505, reference can be made to the description of S301 to S305 in the embodiment shown in FIG. 3 and for S510 to S512, reference can be made to the description of S410 to S412 in the embodiment shown in FIG. 4. The operation principle and technical effect are similar and the detailed description is omitted.

Specifically, the first secondary control device is originally configured with the first control function. The first secondary control device switches its control function from the first control function to the target control function according to the function configuration request. The primary control device broadcasts the first status message to the secondary control devices to notify each secondary control device of the change of the control function of the first secondary control device. The second secondary control device may configure its control function to be the first control function, thereby achieving the function switching between the first secondary control device and the second secondary control device.

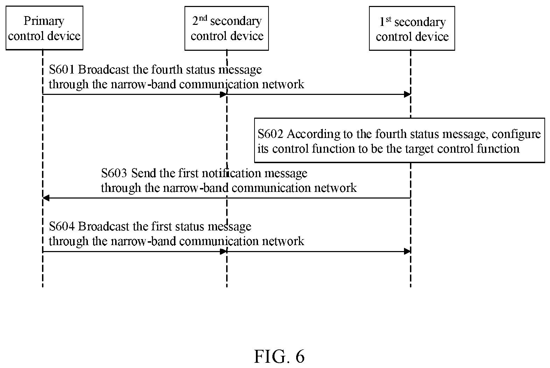

FIG. 6 is a schematic diagram of message exchanges of a control function configuration method according to a fifth example embodiment of the present disclosure. Based on the embodiment shown in FIG. 2, the present disclosure provides another embodiment of the control function configuration method. Specifically, the control function message is a status message. The status message includes the current control function of at least one secondary control device in the control system. To differentiate different status message, this status message is called a fourth status message. As shown in FIG. 6, the control function configuration method provided by the embodiment of the present disclosure may also include the following steps.

At S601, the primary control device broadcasts the fourth status message to the secondary control devices in the control system.

The fourth status message includes the current control function of at least one secondary control device.

Correspondingly, the secondary control devices in the control system receive the fourth status message broadcasted by the primary control device through the narrow-band communication network.

At S602, the first secondary control device configures its control function to be the target control function according to the fourth status message.

At S603, the first secondary control device sends the first notification message to the primary control device through the narrow-band communication network.

At S604, the primary control device broadcasts the first status message to the secondary control devices in the control system through the narrow-band communication network.

For S602 to S604, reference can be made to the description of S202 to S204 in the embodiment shown in FIG. 2. Specifically, the control function message is the fourth status message. The operation principle and technical effect are similar and the detailed description is omitted.

In the control function configuration method provided by the embodiment of the present disclosure, the primary control device broadcasts the fourth status message to notify each secondary control device of the current control function of at least one secondary control device in the control system. The first secondary control device may proactively configure its control function to be the target control function according to the current control function of at least one other secondary control device in the control system. Because the first secondary control device may proactively configure its control function according to the current control function configuration in the control system, the flexibility and autonomy of the configuring the control function by the secondary control device are improved. Moreover, the communication through the narrow-band communication network extends the communication distance and shortens the communication delay.

With reference to different application scenarios, the control function configuration method is further described based on the embodiment shown in FIG. 6.

Optionally, in one application scenario, the second secondary control device with the target control function does not currently exist in the control system. The first secondary control device may or may have been configured with a control function. At S602, configuring, by the first secondary control device, its control function to be the target control function according to the fourth status message may include: directly configuring, by the first secondary control device, its control function to be the target control function according to the fourth status message.

Specifically, if the first secondary control device has not been currently configured with any control function, the first secondary control device may achieve configuring, by the secondary control device, its control function. If the first secondary control device has been currently configured with the control function, the first secondary control device may achieve switching, by the secondary control device, its control function, that is, switching from the originally configured control function to the target control function.

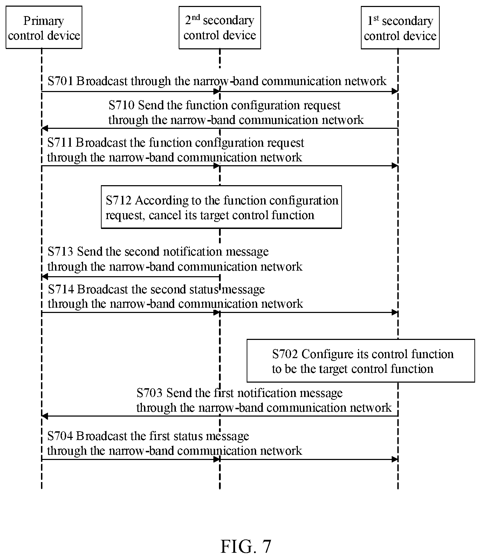

Optionally, in another application scenario, the second secondary control device with the target control function does currently exist in the control system, and the first secondary control device has not been currently configured with any control function. Referring to FIG. 7, FIG. 7 is a schematic diagram of message exchanges of a control function configuration method according to a sixth example embodiment of the present disclosure. As shown in FIG. 7, before S702, the control function configuration method provided by the embodiment of the present disclosure may also include the following steps.

At S710, the first secondary control device sends the function configuration request to the primary control device through the narrow-band communication network.

Correspondingly, the primary control device receives the function configuration request sent by the first secondary control device through the narrow-band communication network.

The function configuration request is used to request to configure the control function of the first secondary control device to be the target control function. The description of the embodiment shown in FIG. 3 can be referred to, and the detailed description is omitted herein.

At S711, the primary control device broadcasts the function configuration request to the secondary control devices in the control system through the narrow-band communication network.

Correspondingly, the secondary control devices in the control system receives the function configuration request broadcasted by the primary control device through the narrow-band communication network.

At S712, the second secondary control device cancels its target control function according to the function configuration request.

At S713, the second secondary control device sends the second notification message to the primary control device through the narrow-band communication network.

The second notification message is used to indicate that the target control function of the second secondary control device has been cancelled.

Correspondingly, the primary control device receives the second notification message sent by the second secondary control device through the narrow-band communication network.

At S714, the primary control device broadcasts the second status message to the secondary control devices in the control system through the narrow-band communication network.

The second status message is used to indicate that the target control function of the second secondary control device has been cancelled.

Correspondingly, the secondary control devices in the system receive the second status message broadcasted by the primary control device through the narrow-band communication network.

For S701 to S704, reference can be made to the description of S601 to S604 in the embodiment shown in FIG. 6 and for S712 to S714, reference can be made to the description of S410 to S412 in the embodiment shown in FIG. 4. The operation principle and technical effect are similar and the detailed description is omitted.

Specifically, through the fourth status message broadcasted by the primary control device, the first secondary control device learns that the current control function of the second secondary control device is the target control function. Because different secondary control devices in the control system cannot be configured with the same control function, the first secondary control device sends the function configuration request to the primary control device. Through the broadcasting by the primary control device, each secondary control device learns that the control function of the first secondary control device needs to be configured to be the target control function. The second secondary control device cancels its target control function and sends the second notification message to the primary control device. Through the broadcasting by the primary control device, the change of the control function of the second secondary control device is notified to each secondary control device. The first secondary control device learns that no secondary control device with the target control function currently exists in the control system, and configures its control function to be the target control function, thereby completing the configuration of the control function.

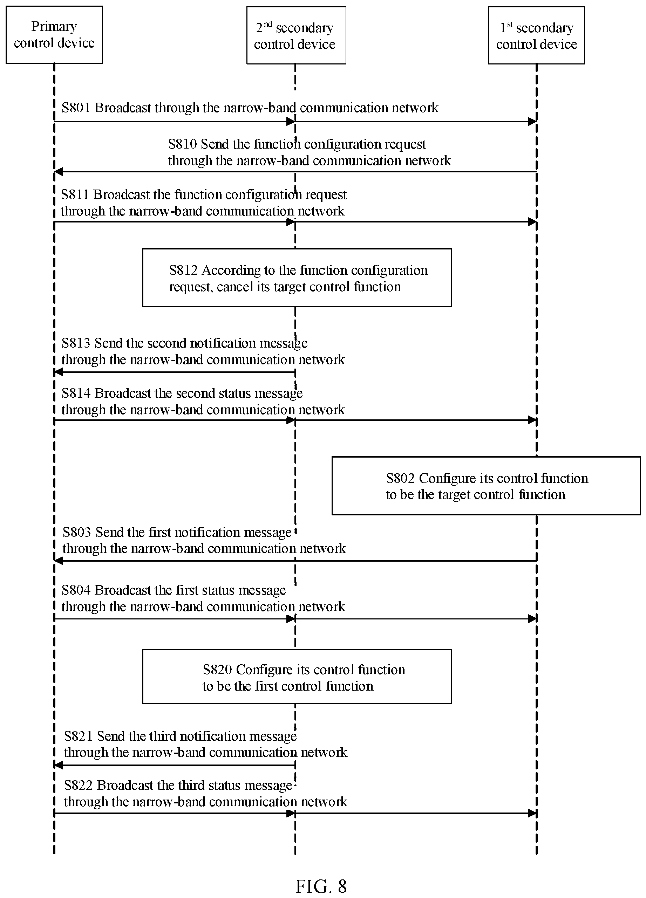

Optionally, in another application scenario, the second secondary control device with the target control function does currently exist in the control system, and the first secondary control device is currently configured with the first control function. Referring to FIG. 8, FIG. 8 is a schematic diagram of message exchanges of a control function configuration method according to a seventh example embodiment of the present disclosure. As shown in FIG. 8, after S804, the control function configuration method provided by the embodiment of the present disclosure may also include the following steps.

At S820, the second secondary control device configures its control function to be the first control function.

At S821, the second secondary control device sends the third notification message to the primary control device through the narrow-band communication network.

The third notification message is used to indicate that the control function of the second secondary control device has been configured to be the first control function.

Correspondingly, the primary control device receives the third notification message sent by the second secondary control device through the narrow-band communication network.

At S822, the primary control device broadcasts the third status message to the secondary control devices in the control system through the narrow-band communication network.

The third status message is used to indicate that the control function of the second secondary control device has been configured to be the first control function.

Correspondingly, the secondary control devices in the control system receives the third status message broadcasted by the primary control device through the narrow-band communication network.

For S801 to S804, reference can be made to the description of S601 to S604 in the embodiment shown in FIG. 6, for S810 to S814, reference can be made to the description of S710 to S714 in the embodiment shown in FIG. 7, and for S820 to S822, reference can be made to the description of S515 to S517 in the embodiment shown in FIG. 5. The operation principle and technical effect are similar and the detailed description is omitted.

Specifically, compared with the embodiment shown in FIG. 7, after the control function of the first secondary control device is switched from the first control function to the target control function, the second secondary control device may configure its control function to the first control function, thereby achieving the function switching between the first secondary control device and the second secondary control device.

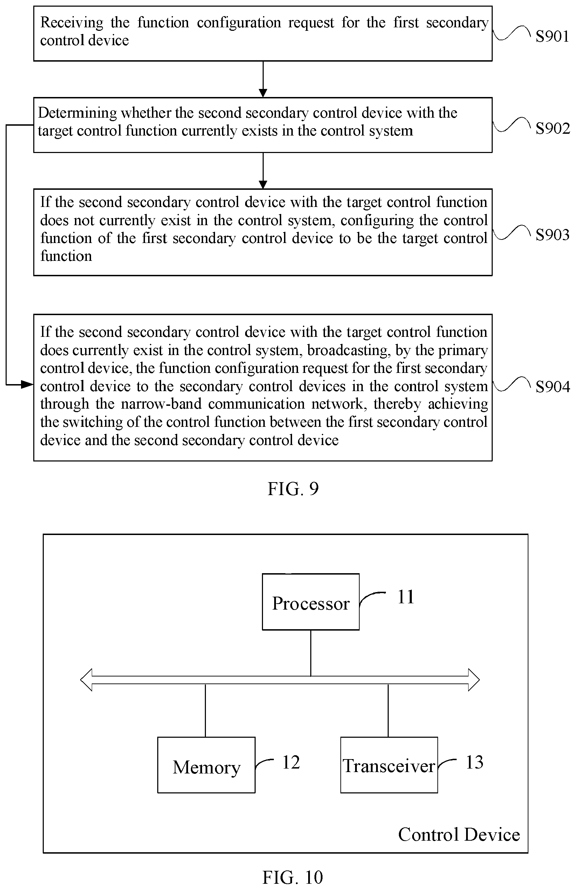

FIG. 9 is a schematic diagram of message exchanges of a control function configuration method according to an eighth example embodiment of the present disclosure. The control function configuration method provided by the embodiment of teh present disclosure may be applied to the control system. The control system may include the primary control device and at least one secondary control device. In the control function configuration method provided by the embodiment of the present disclosure, the execution subject may be the primary control device or the secondary control device. As shown in FIG. 9, the control function configuration method provided by the embodiment of the present disclosure may include the following steps.

At S901, the function configuration request for the first secondary control device is received.

The function configuration request includes the target control function.

Specifically, the first secondary control device is the secondary control device in the control system, of which the control function needs to be configured. The first secondary control device may or may not have been configured with the control function. The function configuration request includes the target control function and is used to request to configure the control function of the first secondary control device to be the target control function.

Optionally, receiving the function configuration request for the first secondary control device may include: receiving the function configuration request by the first secondary control device, or receiving the function configuration request by the primary control device.

Specifically, the first secondary control device or the primary control device may receive the function configuration request through the built-in input apparatus or the externally connected input apparatus. For example, the input apparatus may be the touch display screen. The first secondary control device or the primary control device may obtain the function configuration request based on the touch operation input performed by the user on the touch display screen. In another example, the input apparatus is the audio input device. The function configuration request may be a voice signal inputted by the user through the audio input device. Thus, the first secondary control device or the primary control device may receive the function configuration request inputted by the user.

At S902, whether the second secondary control device with the target control function currently exists in the control system is determined.

At S903, if the second secondary control device with the target control function does not currently exist in the control system, the control function of the first secondary control device is configured to be the target control function.

At S904, if the second secondary control device with the target control function currently exists in the control system, the primary control device broadcasts the function configuration request for the first secondary control device to the secondary control devices in the control system through the narrow-band communication network, thereby achieving the function switching between the first secondary control device and the second secondary control device.

Specifically, because different secondary control devices in the control system cannot be configured to have the same control function, whether the second secondary control device with the target control function currently exists in the control system needs to be determined first. If it does not exist, the control function of the first secondary control device may be directly configured to be the target control function. If it does exist, the control functions of the first secondary control device and the second secondary control device may be switched.

In the control function configuration method provided by the embodiment of the present disclosure, the control function of the first secondary control device may be configured according to the function configuration request for the first secondary control device, thereby simplifying the complexity of configuring the control function and improving the flexibility of configuring the control function. Moreover, the communication through the narrow-band communication network extends the communication distance and shortens the communication delay.

Optionally, the control function configuration method provided by the embodiment of the present disclosure may further include the following steps.

The primary control device obtains the status information of the secondary control devices in the control system. The status information includes at least the connection status of the secondary control device and the corresponding control function.

The primary control device broadcast the status information to the secondary control devices in the control system through the narrow-band communication network.

Optionally, if the second secondary control device with the target control function does not currently exist in the control system, configuring the control function of the first secondary control device to be the target control function includes the following steps.

If the first secondary control device receives the function configuration request, the first secondary control device directly configures its control function to the target control function according to be the function configuration request.

If the primary control device receives the function configuration request, the primary control device sends the function configuration request to the first secondary control device through the narrow-band communication network, such that the first secondary control device configures its control function to be the target control function according to the function configuration request.

Optionally, sending, by the primary control device, the function configuration request to the first secondary control device through the narrow-band communication network includes: sending, by the primary control device, the function configuration request in the form of broadcasting to the first secondary control device through the narrow-band communication network.

Optionally, if the second secondary control device with the target control function does currently exist in the control system, broadcasting, by the primary control device, the function configuration request for the first secondary control device to the secondary control devices in the control system through the narrow-band communication network to achieve the function switching between the first secondary control device and the second secondary control device includes the following steps.

If the first secondary control device receives the function configuration request, the first secondary control device sends the function configuration request for the first secondary control device to the primary control device through the narrow-band communication network. The primary control device broadcasts the function configuration request for the first secondary control device to the secondary control devices in the control system through the narrow-band communication network.

If the primary control device receives the function configuration request, the primary control device directly broadcasts the function configuration request for the first secondary control device to the secondary control devices in the control system through the narrow-band communication network.

Optionally, broadcasting, by the primary control device, the function configuration request for the first secondary control device to the secondary control devices in the control system through the narrow-band communication network to achieve the function switching between the first secondary control device and the second secondary control device includes the following steps.

The second secondary control device receives the function configuration request broadcasted by the primary control device through the narrow-band communication network.

The second secondary control device cancels its target control function according to the function configuration request.

The primary control device obtains the change of the control function of the second secondary control device and broadcasts the changed control function of the second secondary control device to the secondary control devices in the control system through the narrow-band communication network.

After the first secondary control device determines according to the changed control function of the second secondary control device that the second secondary control device has cancelled its target control function, the first secondary control device configures its control function to be the target control function according to the function configuration request.

The primary control device obtains the change of the control function of the first secondary control device and broadcasts the changed control function of the first secondary control device to the secondary control devices in the control system through the narrow-band communication network.

After the second secondary control device determines according to the changed control function of the first secondary control device that the first secondary control device has configured its control function to be the target control function, the second secondary control device configures its control function to be the original control function of the first secondary control device, thereby achieving the function switching between the first secondary control device and the second secondary control device.

Optionally, broadcasting, by the primary control device, the status information to the secondary control devices in the control system through the narrow-band communication network includes: periodically broadcasting, by the primary control device, the status information to the secondary control devices in the control system through the narrow-band communication network, and/or when being triggered by the change of the control function of the secondary control device, broadcasting, by the primary control device, the status information to the secondary control devices in the control system through the narrow-band communication network.

It should be noted that for the description of this embodiment, reference can be made to the description of the embodiments shown in FIGs. 2-8. The operation principle and technical effect are similar and the detailed description is omitted.

FIG. 10 is a schematic structural diagram of a control device according to an example embodiment of the present disclosure. As shown in FIG. 10, the control device may include a processor 11, a memory 12, and a transceiver 13. The memory 12 is used to store instructions. The transceiver 13 is used to communicate with other devices. The processor 11 is used to execute the instructions stored in the memory 12 to enable the control device to perform the operations that are performed by the primary control device or the secondary control device in the embodiments shown in FIGs. 2-9. The operation principle and technical effect are similar and the detailed description is omitted.

Specifically, the control device shown in FIG. 10 may be the primary control device.

The processor 11 is configured to control the transceiver 13 to perform the following operations:
broadcasting the control function message to the secondary control devices in the control system through the narrow-band communication network, where the control function message is used for the first secondary control device to configure the control function;
receiving the first notification message sent by the first secondary control device through the narrow-band communication network, where the first notification message is used to indicate that the control function of the first secondary control device has been configured to be the target control function;
broadcasting the first status message to the secondary control devices in the control system through the narrow-band communication network, where the first status message is used to indicate that the control function of the first secondary control device has been configured to be the target control function.

Optionally, the processor 11 is further configured to:
obtain the function configuration request, where the function configuration request is used to request to configure the control function of the first secondary control device to be the target control function.

Specifically, the transceiver 13 is configured to:
broadcast the function configuration request to the secondary control devices in the control system through the narrow-band communication network.

Optionally, if the second secondary control device with the target control function does currently exist in the control system, the transceiver 13 is further configured to:
receive the second notification message sent by the second secondary control device through the narrow-band communication network, where the second notification message is used to indicate that the target control function of the second secondary control device has been cancelled;
broadcast the second status message to the secondary control devices in the control system through the narrow-band communication network, where the second status message is used to indicate that the target control function of the second secondary control device has been cancelled.

Optionally, the processor 11 is configured to:
obtain the function configuration request inputted by the user; or
control the transceiver 13 to receive the function configuration request sent by the first secondary control device through the narrow-band communication network; or
control the transceiver 13 to receive the function configuration request sent by the secondary control device other than the first secondary control device through the narrow-band communication network.

Specifically, the transceiver 13 is configured to:
broadcast the function configuration request to the secondary control devices in the control system through the narrow-band communication network.

Optionally, the transceiver 13 is configured to:
broadcast the fourth status message to the secondary control devices in the control system through the narrow-band communication network, where the fourth status message includes the current control function of at least one secondary control device in the control system.

Optionally, if the second secondary control device with the target control function does currently exist in the control system, the transceiver 13 is further configured to:
receive the function configuration request sent by the first secondary control device through the narrow-band communication network, where the function configuration request is used to request to configure the control function of the first secondary control device to be the target control function;
broadcast the function configuration request to the secondary control devices in the control system through the narrow-band communication network;
receive the second notification message sent by the second secondary control device through the narrow-band communication network, where the second notification message is used to indicate that the target control function of the second secondary control device has been cancelled;
broadcast the second status message to the secondary control devices in the control system through the narrow-band communication network, where the second status message is used to indicate that the target control function of the second secondary control device has been cancelled.

Optionally, if the original control function of the first secondary control device is the first control function, the transceiver 13 is further configured to:
receive the third notification message sent by the second secondary control device through the narrow-band communication network, where the third notification message is used to indicate that the control function of the second secondary control device has been configured to be the first control function;
broadcast the third status message to the secondary control devices in the control system through the narrow-band communication network, where the third status message is used to indicate that the control function of the second secondary control device has been configured to be the first control function.

Optionally, the transceiver 13 is further configured to:
broadcast the status information to the secondary control devices in the control system through the narrow-band communication network, where the status information includes the current control function of the secondary control device in the control system.

Specifically, the control device shown in FIG. 10 may be the first secondary control device.

The processor 11 is configured to:
control the transceiver 13 to receive the control function message broadcasted by the primary control device through the communication network, where the control function message is used for the first secondary control device to configure the control function;
according to the control function message, configure the control function of the first secondary control device to be the target control function;
control the transceiver 13 to send the first notification message to the primary control device through the narrow-band communication network, where the first notification message is used to indicate that the control function of the first secondary control device has been configured to be the target control function.

Optionally, the control function message is the function configuration request. The function configuration request is used to request to configure the control function of the first secondary control device to be the target control function. Alternatively, the control function message is the first status message. The first status message includes the current control function of at least one secondary control device in the control system.

Optionally, if the second secondary control device with the target control function does currently exist in the control system, the transceiver 13 is further configured to:
receive the second status message broadcasted by the primary control device through the narrow-band communication network, where the second status message is used to indicate that the target control function of the second secondary control device has been cancelled.

Optionally, if the control function message is the first status message, the transceiver 13 is further configured to:
send the function configuration request to the primary control device through the narrow-band communication network.

Optionally, if the second secondary control device with the target control function does not currently exist in the control system, the processor 11 is configured to:
configure the control function of the first secondary control device to be the target control function.

Optionally, the transceiver 13 is further configured to:
receive the status information periodically broadcasted by the primary control device through the narrow-band communication network, where the status information includes the current control function of the secondary control device in the control system.

Specifically, the control device shown in FIG. 10 may be the second secondary control device.

The processor 11 is configured to:
control the transceiver 13 to receive the function configuration request broadcasted by the primary control device through the narrow-band communication network, where the function configuration request is used to request to configure the control function of the first secondary control device in the control system to be the target control function;
if the current control function of the second secondary control device is the target control function, cancel the target control function of the second secondary control device according to the function configuration request;
control the transceiver 13 to send the first notification message to the primary control device through the narrow-band communication network, where the first notification message is used to indicate that the target control function of the second secondary control device has been cancelled.

Optionally, if the original control function of the first secondary control device is the first control function, the transceiver 13 is further configured to receive the first status message broadcasted by the primary control device through the narrow-band communication device. The first status message is used to indicate that the control function of the first secondary control device has been configured to be the target control function.

The processor 11 is further configured to configure the control function of the second secondary control device to be the first control function.

The transceiver 13 is further configured to send the second notification message to the primary control device through the narrow-band communication network. The second notification message is used to indicate that the control function of the second secondary control device has been configured to be the first control function.

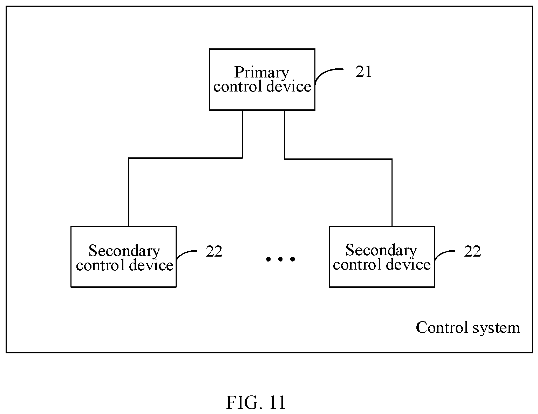

FIG. 11 is a schematic structural diagram of a control system according to an example embodiment of the present disclosure. The control system provided by the embodiment of the present disclosure may include a primary control device 21 and at least one secondary control device 22. The primary control device 21 or the secondary control device 22 are configured to perform the operations that are performed by the primary control device or the secondary control device in the embodiments shown in FIGs. 2-9. As shown in FIG. 11, the primary control device 21 or the secondary control device 22 are configured to:
receive the function configuration request for the first secondary control device, where the function configuration request includes the target control function;
determine whether the second secondary control device with the target control function currently exists in the control system;
if the second secondary control device with the target control function does not currently exist in the control system, configure the control function of the first secondary control device to be the target control function;
if the second secondary control device with the target control function does currently exist in the control system, broadcast, by the primary control device, the function configuration request for the first secondary control device to the secondary control devices in the control system through the narrow-band communication network, thereby achieving the function switching between the first secondary control device and the second secondary control device.

Optionally, the primary control device is further configured to obtain the status information of the secondary control device in the control system. The status information includes at least the connection status of the secondary control device and the corresponding control function.

The primary control device is further configured to broadcast the status information to the secondary control devices in the control system through the narrow-band communication network.

Optionally, the first secondary control device is configured to receive the function configuration request. Alternatively, the primary control device is configured to receive the function configuration request.

Optionally, if the first secondary control device receives the function configuration request, the first secondary control device is configured to directly configure its control function to be the target control function according to the function configuration request.

If the primary control device receives the function configuration request, the primary control device is configured to send the function configuration request to the first secondary control device through the narrow-band communication network, such that the first secondary control device configures its control function to be the target control function according to the function configuration request.

Optionally, the primary control device is configured to:
send the function configuration request to the first secondary control device in teh form of broadcasting through the narrow-band communication network.

Optionally, if the first secondary control device receives the function configuration request, the first secondary control device is configured to send the function configuration request for the first secondary control device to the primary control device through the narrow-band communication network. The primary control device broadcasts the function configuration request for the first secondary control device to the secondary control devices in the control system through the narrow-band communication network.

If the primary control device receives the function configuration request, the primary control device is configured to directly broadcast the function configuration request for the first secondary control device to the secondary control devices in the control system through the narrow-band communication network.

Optionally, the second secondary control device is configured to receive the function configuration request broadcasted by the primary control device through the narrow-band communication network.

The second secondary control device is configured to cancel its target control function according to the function configuration request.

The primary control device is configured to obtain the change of the control function of the second secondary control device and broadcast the changed control function of the second secondary control device to the secondary control devices in the control system through the narrow-band communication network.

The first secondary control device is configured to, after determining that the target control function of the second secondary control device has been cancelled according to the changed control function of the second secondary control device, configure its control function to be the target control function according to the function configuration request.

The primary control device is configured to obtain the change of the control function of the first secondary control device and broadcast the changed control function of the first secondary control device to the secondary control devices in the control system through the narrow-band communication network.

The second secondary control device is configured to, after determining that the control function of the first secondary control device has been configured to be the target control function according to the changed control function of the first secondary control device, configure its control function to be the original control function of the first secondary control device, thereby achieving the function switching between the first secondary control device and the second secondary control device.

Optionally, the primary control device is configured to periodically broadcast the status information to the secondary control devices in the control system through the narrow-band communication network, and/or the primary control device is configured to broadcast the status information to the secondary control devices in the control system through the narrow-band communication network after the primary control device is triggered by the status change of the secondary control device.

The primary control device or the secondary control device included in the control system provided by the embodiment of the present disclosure are configured to perform the operations that are performed by the primary control device or the secondary control device in the embodiments shown in FIGs. 2-9. The operation principle and technical effect are similar and the detailed description is omitted.

Those of ordinary skill in the art may understand that all or part of the steps of the in the method embodiments may be implemented by a program instructing relevant hardware. The program may be stored in a computer-readable storage medium. When the program is executed, the steps of the method embodiments are executed. The storage medium includes: a read-only memory (ROM), a random-access memory (RAM), a magnetic disk, an optical disk, or other media that can store the program codes.

Finally, it should be noted that the above embodiments are only used to illustrate the technical solutions of the present disclosure, and not to limit them. Although the present disclosure has been described in detail with reference to the above embodiments, those of ordinary skill in the art should understand that it is still possible to modify the technical solutions described in the above embodiments, or to equivalently replace some or all of the technical features. These modifications or replacements made within the spirit and principle of the corresponding technical solutions still fall with the scope of the present disclosure.

## Claims

1. A control function configuration method, comprising:
broadcasting a control function message to secondary control devices in a control system through a narrow-band communication network, wherein the control function message is used for a first secondary control device to configure its control function;
receiving a first notification message sent by the first secondary control device through the narrow-band communication network, wherein the first notification message is used to indicate that the control function of the first secondary control device has been configured to be a target control function;
broadcasting a first status message to the secondary control devices in the control system through the narrow-band communication network, wherein the first status message is used to indicate that the control function of the first secondary control device has been configured to be the target control function.

2. The method of claim 1, wherein before broadcasting the control function message to the secondary control devices in the control system through the narrow-band communication network, the method further includes:
obtaining a function configuration request, wherein the function configuration request is used to request to configure the control function of the first secondary control device to be the target control function;
broadcasting the control function message to the secondary control devices in the control system through the narrow-band communication network includes:
broadcasting the function configuration request to the secondary control devices in the control system through the narrow-band communication network.

3. The method of claim 2, wherein if a second secondary control device with the target control function currently exists in the control system, the method further includes:
receiving a second notification message sent by the second secondary control device through the narrow-band communication network, wherein the second notification message is used to indicate that the target control function of the second secondary control device has been cancelled;
broadcasting a second status message to the secondary control devices in the control system through the narrow-band communication network, wherein the second status message is used to indicate that the target control function of the second secondary control device has been cancelled.

4. The method of any of claim 2 or 3, wherein obtaining the function configuration request includes:
obtaining the function configuration request inputted by a user; or
receiving the function configuration request sent by the first secondary control device through the narrow-band communication network; or
receiving the function configuration request sent by a secondary control device other than the first secondary control device through the narrow-band communication network.

5. The method of claim 1, wherein broadcasting the control function message to the secondary control devices in the control system through the narrow-band communication network includes:
broadcasting a fourth status message to the secondary control devices in the control system through the narrow-band communication network, wherein the fourth status message includes a current control function of at least one secondary control device in the control system.

6. The method of claim 5, wherein if a second secondary control device with the target control function currently exists in the control system, the method further includes:
receiving a function configuration request sent by the first secondary control device through the narrow-band communication network, wherein the function configuration request is used to request to configure the control function of the first secondary control device to be the target control function;
broadcasting the function configuration request to the secondary control devices in the control system through the narrow-band communication network;
receiving a second notification message sent by the second secondary control device through the narrow-band communication network, wherein the second notification message is used to indicate that the target control function of the second secondary control device has been cancelled;
broadcasting a second status message to the secondary control devices in the control system through the narrow-band communication network, wherein the second status message is used to indicate that the target control function of the second secondary control device has been cancelled.

7. The method of any of claim 3 or 6, wherein if an original control function of the first secondary control device is a first control function, the method further includes:
receiving a third notification message sent by the second secondary control device through the narrow-band communication network, wherein the third notification message is used to indicate that the control function of the second secondary control device has been configured to be the first control function;
broadcasting a third status message to the secondary control devices in the control system through the narrow-band communication network, wherein the third status message is used to indicate that the control function of the second secondary control device has been configured to be the first control function.

8. The method of any one of claims 1-7, further comprising:
broadcasting status information to the secondary control devices in the control system through the narrow-band communication network, wherein the status information includes the current control function of the secondary control device in the control system.

9. A control function configuration method, comprising:
receiving a control function message broadcasted by a primary control device through a narrow-band communication network, wherein the control function message is used for a first secondary control device to configure its control function;
configuring the control function of the first secondary control device to be a target control function according to the control function message;
sending a first notification message to the primary control device through the narrow-band communication network, wherein the first notification message is used to indicate that the control function of the first secondary control device has been configured to be the target control function.

10. The method of claim 9, wherein:
the control function message is a function configuration request, wherein the function configuration request is used to request to configure the control function of the first secondary control device to be the target control function; or
the control function message is a first status message, wherein the first status message includes a current control function of at least one secondary control device in the control system.

11. The method of any of claim 9 or 10, wherein if a second secondary control device with the target control function currently exists in the control system, before configuring the control function of the first secondary control device to be the target control function according to the control function message, the method further includes:
receiving a second status message sent by the primary control device through the narrow-band communication network, wherein the second status message is used to indicate that the target control function of the second secondary control device has been cancelled.

12. The method of claim 11, wherein if the control function message is the first status message, before configuring the control function of the first secondary control device to be the target control function according to the control function message, the method further includes:
sending the function configuration request to the primary control device through the narrow-band communication network.

13. The method of claim 9, wherein if a second secondary control device with the target control function does not currently exist in the control system, configuring the control function of the first secondary control device to be the target control function according to the control function message includes:
configuring the control function of the first secondary control device to be the target control function.

14. The method of any one of claims 9-13, further comprising:
receiving status information periodically broadcasted by the primary control device through the narrow-band communication network, wherein the status information includes a current control function of a secondary control device in the control system.

15. A control function configuration method, comprising:
receiving a function configuration request broadcasted by a primary control device through a narrow-band communication network, wherein the function configuration request is used to request to configure a control function of a first secondary control device to be a target control function;
if a current control function of a second secondary control device is the target control device, cancelling the target control function of the second secondary control device according to the function configuration request;
sending a first notification message to the primary control device through the narrow-band communication network, wherein the first notification message is used to indicate that the control function of the second secondary control device has been cancelled.

16. The method of claim 15, wherein if an original control function of the first secondary control device is a first control function, the method further includes:
receiving a first status message broadcasted by the primary control device through the narrow-band communication network, wherein the first status message is used to indicate that the control function of the first secondary control device has been configured to be the target control function;
configuring the control function of the second secondary control device to be the first control function;
sending a second notification message to the primary control device through the narrow-band communication network, wherein the second notification message is used to indicate that the control function of the second secondary control device has been configured to be the first control function.

17. A control function configuration method applied to a control system including a primary control device and at least one secondary control device, comprising:
receiving a function configuration request for a first secondary control device, wherein the function configuration request includes a target control function;
determining whether a second secondary control device with the target control function currently exists in the control system;
if the second secondary control device with the target control function does not currently exist in the control system, configuring a control function of the first secondary control device to be the target control function;
if the second secondary control device with the target control function currently exists in the control system, broadcasting, by the primary control device, the function configuration request for the first secondary control device to secondary control devices in the control system through a narrow-band communication network to achieve function switching between the first secondary control device and the second secondary control device.

18. The method of claim 17, further comprising:
obtaining, by the primary control device, status information of a secondary control device in the control system, wherein the status information includes at least a connection status of the secondary control device and the corresponding control function;
broadcasting, by the primary control device, the status information to the secondary control devices through the narrow-band communication network.

19. The method of claim 18, wherein receiving the function configuration request for the first secondary control device includes:
receiving, by the first secondary control device, the function configuration request; or
receiving, by the primary control device, the function configuration request.

20. The method of claim 19, wherein if the second secondary control device with the target control function does not currently exist in the control system, configuring the control function of the first secondary control device to be the target control function includes:
if the first secondary control device receives the function configuration request, directly configuring, by the first secondary control device, its control function to be the target control function according to the function configuration request;
if the primary control device receives the function configuration request, sending, by the primary control device, the function configuration request to the first secondary control device through the narrow-band communication network, such that the first secondary control device configures its control function to be the target control function according to the function configuration request.

21. The method of claim 20, wherein sending, by the primary control device, the function configuration request to the first secondary control device through the narrow-band communication network includes:
sending the function configuration request to the first secondary control device in the form of broadcasting through the narrow-band communication network.

22. The method of claim 19, wherein if the second secondary control device with the target control function currently exists in the control system, broadcasting, by the primary control device, the function configuration request for the first secondary control device to the secondary control devices in the control system through the narrow-band communication network to achieve function switching between the first secondary control device and the second secondary control device includes:
if the first secondary control device receives the function configuration request, sending, by the first secondary control device, the function configuration request for the first secondary control device to the primary control device through the narrow-band communication network, and broadcasting, by the primary control device, the function configuration request for the first secondary control device to the secondary control devices in the control system through the narrow-band communication network;
if the primary control device receives the function configuration request, directly broadcasting, by the primary control device, the function configuration request for the first secondary control device to the secondary control devices in the control system through the narrow-band communication network.

23. The method of any one of claims 18-22, wherein broadcasting, by the primary control device, the function configuration request for the first secondary control device to the secondary control devices in the control system through the narrow-band communication network to achieve the function switching between the first secondary control device and the second secondary control device includes:
receiving, by the second secondary control device, the function configuration request broadcasted by the primary control device through the narrow-band communication network;
cancelling, by the second secondary control device, its target control function according to the function configuration request;
obtaining, by the primary control device, a status change of the second secondary control device, and broadcasting a changed status of the second secondary control device to the secondary control devices in the control system through the narrow-band communication network;
after the first secondary control device determines that the target control function of the second secondary control device has been cancelled according to the changed status of the second secondary control device, configuring its control function to be the target control function according to the function configuration request;
obtaining, by the primary control device, the status change of the first secondary control device, and broadcasting the changed status of the first secondary control device to the secondary control devices in the control system through the narrow-band communication network;
after the second secondary control device determines that the control function of the first secondary control device has been configured to be the target control function according to the changed status of the first secondary control device, configuring its control function to be an original control function of the first secondary control device to complete the function switching between the first secondary control device and the second secondary control device.

24. The method of claim 18, wherein broadcasting, by the primary control device, the status information to the secondary control devices through the narrow-band communication network includes:
periodically broadcasting, by the primary control device, the status information to the secondary control devices through the narrow-band communication network; and/or
triggered by the status change of any secondary control device, broadcasting, by the primary control device, the status information to the secondary control devices through the narrow-band communication network.

25. A control device comprising a memory, a processor, and a transceiver, wherein:
the memory is configured to store program code;
the processor is configured to call the program code, when the program code is executed, control the transceiver to:
broadcast a control function message to secondary control devices in a control system through a narrow-band communication network, wherein the control function message is used for a first secondary control device to configure its control function;
receive a first notification message sent by the first secondary control device through the narrow-band communication network, wherein the first notification message is used to indicate that the control function of the first secondary control device has been configured to be a target control function;
broadcast a first status message to the secondary control devices in the control system through the narrow-band communication network, wherein the first status message is used to indicate that the control function of the first secondary control device has been configured to be the target control function.

26. The control device of claim 25, wherein:
the processor is further configured to obtain a function configuration request, wherein the function configuration request is used to request to configure the control function of the first secondary control device to be the target control function;
the transceiver is configured to broadcast the function configuration request to the secondary control devices in the control system through the narrow-band communication network.

27. The control device of claim 26, wherein if a second secondary control device with the target control function currently exists in the control system, the transceiver is further configured to:
receive a second notification message sent by the second secondary control device through the narrow-band communication network, wherein the second notification message is used to indicate that the target control function of the second secondary control device has been cancelled;
broadcast a second status message to the secondary control devices in the control system through the narrow-band communication network, wherein the second status message is used to indicate that the target control function of the second secondary control device has been cancelled.

28. The control device of any of claim 26 or 27, wherein the processor is further configured to:
obtain the function configuration request inputted by a user; or
receive the function configuration request sent by the first secondary control device through the narrow-band communication network; or
receive the function configuration request sent by a secondary control device other than the first secondary control device through the narrow-band communication network.

29. The control device of claim 25, wherein the transceiver is further configured to:
broadcast a fourth status message to the secondary control devices in the control system through the narrow-band communication network, wherein the fourth status message includes a current control function of at least one secondary control device in the control system.

30. The control device of claim 29, wherein if a second secondary control device with the target control function currently exists in the control system, the transceiver is further configured to:
receive a function configuration request sent by the first secondary control device through the narrow-band communication network, wherein the function configuration request is used to request to configure the control function of the first secondary control device to be the target control function;
broadcast the function configuration request to the secondary control devices in the control system through the narrow-band communication network;
receive a second notification message sent by the second secondary control device through the narrow-band communication network, wherein the second notification message is used to indicate that the target control function of the second secondary control device has been cancelled;
broadcast a second status message to the secondary control devices in the control system through the narrow-band communication network, wherein the second status message is used to indicate that the target control function of the second secondary control device has been cancelled.

31. The control device of any of claim 27 or 30, wherein if an original control function of the first secondary control device is a first control function, the transceiver is further configured to:
receive a third notification message sent by the second secondary control device through the narrow-band communication network, wherein the third notification message is used to indicate that the control function of the second secondary control device has been configured to be the first control function;
broadcast a third status message to the secondary control devices in the control system through the narrow-band communication network, wherein the third status message is used to indicate that the control function of the second secondary control device has been configured to be the first control function.

32. The control device of any one of claims 25-31, wherein the transceiver is further configured to:
broadcast status information to the secondary control devices in the control system through the narrow-band communication network, wherein the status information includes the current control function of the secondary control device in the control system.

33. A control device comprising a memory, a processor, and a transceiver, wherein:
the memory is configured to store program code;
the processor is configured to call the program code, when the program code is executed:
control the transceiver to receive a control function message broadcasted by a primary control device through a narrow-band communication network, wherein the control function message is used for a first secondary control device to configure its control function;
configure the control function of the first secondary control device to be a target control function according to the control function message;
control the transceiver to send a first notification message to the primary control device through the narrow-band communication network, wherein the first notification message is used to indicate that the control function of the first secondary control device has been configured to be the target control function.

34. The control device of claim 33, wherein:
the control function message is a function configuration request, wherein the function configuration request is used to request to configure the control function of the first secondary control device to be the target control function; or
the control function message is a first status message, wherein the first status message includes a current control function of at least one secondary control device in the control system.

35. The control device of any of claim 33 or 34, wherein if a second secondary control device with the target control function currently exists in the control system, the transceiver is further configured to:
receive a second status message sent by the primary control device through the narrow-band communication network, wherein the second status message is used to indicate that the target control function of the second secondary control device has been cancelled.

36. The control device of claim 35, wherein if the control function message is the first status message, the transceiver is further configured to:
send the function configuration request to the primary control device through the narrow-band communication network.

37. The control device of claim 33, wherein if a second secondary control device with the target control function does not currently exist in the control system, the processor is further configured to:
configure the control function of the first secondary control device to be the target control function.

38. The control device of any one of claims 33-37, wherein the transceiver is further configured to:
receive status information periodically broadcasted by the primary control device through the narrow-band communication network, wherein the status information includes a current control function of a secondary control device in the control system.

39. A control device comprising a memory, a processor, and a transceiver, wherein:
the memory is configured to store program code;
the processor is configured to call the program code, when the program code is executed:
receive a function configuration request broadcasted by a primary control device through a narrow-band communication network, wherein the function configuration request is used to request to configure a control function of a first secondary control device to be a target control function;
if a current control function of a second secondary control device is the target control device, cancel the target control function of the second secondary control device according to the function configuration request;
send a first notification message to the primary control device through the narrow-band communication network, wherein the first notification message is used to indicate that the control function of the second secondary control device has been cancelled.

40. The control device of claim 39, wherein if an original control function of the first secondary control device is a first control function:
the transceiver is configured to receive a first status message broadcasted by the primary control device through the narrow-band communication network, wherein the first status message is used to indicate that the control function of the first secondary control device has been configured to be the target control function;
the processor is further configured to configure the control function of the second secondary control device to be the first control function;
the transceiver is further configured to send a second notification message to the primary control device through the narrow-band communication network, wherein the second notification message is used to indicate that the control function of the second secondary control device has been configured to be the first control function.

41. A control system comprising a primary control device and at least one secondary control device, wherein the primary control device or the at least one secondary control device is configured to:
receive a function configuration request for a first secondary control device, wherein the function configuration request includes a target control function;
determine whether a second secondary control device with the target control function currently exists in the control system;
if the second secondary control device with the target control function does not currently exist in the control system, configure a control function of the first secondary control device to be the target control function;
if the second secondary control device with the target control function currently exists in the control system, broadcast, by the primary control device, the function configuration request for the first secondary control device to secondary control devices in the control system through a narrow-band communication network to achieve function switching between the first secondary control device and the second secondary control device.

42. The control system of claim 41, wherein:
the primary control device is further configured to obtain status information of a secondary control device in the control system, wherein the status information includes at least a connection status of the secondary control device and the corresponding control function;
the primary control device is further configured to send the status information to the secondary control devices through the narrow-band communication network.

43. The control system of claim 42, wherein:
the first secondary control device is configured to receive the function configuration request; or
the primary control device is further configured to receive the function configuration request.

44. The control system of claim 43, wherein:
if the first secondary control device receives the function configuration request, the first secondary control device is further configured to directly configure its control function to be the target control function according to the function configuration request;
if the primary control device receives the function configuration request, the primary control device is further configured to send the function configuration request to the first secondary control device through the narrow-band communication network, such that the first secondary control device configures its control function to be the target control function according to the function configuration request.

45. The control system of claim 44, wherein the primary control device is further configured to:
send the function configuration request to the first secondary control device in the form of broadcasting through the narrow-band communication network.

46. The control system of claim 43, wherein:
if the first secondary control device receives the function configuration request, the first secondary control device is further configured to send the function configuration request for the first secondary control device to the primary control device through the narrow-band communication network, and the primary control device is further configured to broadcast the function configuration request for the first secondary control device to the secondary control devices in the control system through the narrow-band communication network;
if the primary control device receives the function configuration request, the primary control device is further configured to directly broadcast the function configuration request for the first secondary control device to the secondary control devices in the control system through the narrow-band communication network.

47. The control system of any one of claims 42-46, wherein:
the second secondary control device is configured to receive the function configuration request broadcasted by the primary control device through the narrow-band communication network;
the second secondary control device is further configured to cancel its target control function according to the function configuration request;
the primary control device is further configured to obtain a status change of the second secondary control device, and broadcast a changed status of the second secondary control device to the secondary control devices in the control system through the narrow-band communication network;
after the first secondary control device determines that the target control function of the second secondary control device has been cancelled according to the changed status of the second secondary control device, the first secondary control device is further configured to configure its control function to be the target control function according to the function configuration request;
the primary control device is further configured to obtain the status change of the first secondary control device, and broadcast the changed status of the first secondary control device to the secondary control devices in the control system through the narrow-band communication network;
after the second secondary control device determines that the control function of the first secondary control device has been configured to be the target control function according to the changed status of the first secondary control device, the second secondary control device is further configured to configure its control function to be an original control function of the first secondary control device to complete the function switching between the first secondary control device and the second secondary control device.

48. The control system of claim 42, wherein:
the primary control device is further configured to periodically broadcast the status information to the secondary control devices through the narrow-band communication network; and/or
triggered by the status change of any secondary control device, the primary control device is further configured to broadcast the status information to the secondary control devices through the narrow-band communication network.

49. A storage medium comprising a computer-readable storage medium and a computer program, wherein:
the computer program is configured to implement the control function configuration method of any one of claims 1-24.
